Europäisches Patentamt

European Patent Office

Office européen des brevets

(11) Numéro de publication: **0 072 326**
**A1**

## (12) DEMANDE DE BREVET EUROPEEN

(21) Numéro de dépôt: **82401487.2**

(22) Date de dépôt: **06.08.82**

(51) Int. Cl.³: **F 16 L 39/04**

(30) Priorité: **10.08.81 FR 8115429**

(43) Date de publication de la demande: **16.02.83**
**Bulletin 83/7**

(84) Etats contractants désignés: **AT BE DE GB IT NL SE**

(71) Demandeur: **FIVES-CAIL BABCOCK, Société anonyme,
7 rue Montalivet, F-75383 Paris Cedex 08 (FR)**

(72) Inventeur: **Rizzato, Roland, "Olympio" Chemin de la
Réclusière, F-38200 Vienne (FR)**
Inventeur: **Mathoulin, Marcel, Square Croix Gauthier,
F-42400 Saint-Chamond (FR)**

(74) Mandataire: **Fontanié, Etienne, FIVES-CAIL
BABCOCK 7, rue Montalivet, F-75383 Paris
Cedex 08 (FR)**

(54) **Dispositif pour amener un fluide à un appareil rotatif et/ou pour l'évacuer.**

(57) L'invention a pour objet un dispositif pour amener un fluide à un appareil rotatif et/ou pour l'évacuer, constitué par une pièce cylindrique (1), solidaire de l'appareil et dont l'axe coïncide avec l'axe de rotation, un manchon fixe (3) disposé coaxialement à la pièce rotative de façon à ménager autour de celle-ci au moins une chambre circulaire dans laquelle débouchent des passages (10) prévus dans le manchon et la pièce cylindrique rotative, ces passages étant reliés, respectivement, à une tuyauterie fixe et à un circuit de l'appareil, et des joints d'étanchéité circulaires (7) placés aux extrémités de ladite chambre, entre la pièce rotative et le manchon.

Pour faciliter le montage et l'entretien de ce dispositif, le manchon est en deux parties (3', 3") dont le plan de jonction (B–B) contient l'axe du manchon, et des joints d'étanchéité (9) sont logés dans des rainures longitudinales usinées dans la surface intérieure du manchon, dans le plan de jonction des deux parties, ces joints (9) étant appliqués de manière étanche contre les joints d'étanchéité circulaires (7) lorsque le manchon (3) est assemblé et monté sur la pièce cylindrique rotative (1).

ACTORUM AG

- 1 -

Dispositif pour amener un fluide à un appareil rotatif et/ou pour l'évacuer

La présente invention a pour objet un dispositif permettant d'alimenter en fluide un appareil rotatif, à partir d'une source fixe, et/ou pour évacuer un fluide de l'appareil vers un poste fixe.

De nombreux appareils rotatifs nécessitent pour leur fonctionnement un ou plusieurs fluides, liquide ou gaz, dont l'alimentation, et éventuellement l'évacuation, doivent être assurées pendant la rotation. A cette fin, on utilise des dispositifs constitués par une pièce cylindrique, solidaire de l'appareil rotatif et dont l'axe coïncide avec l'axe de rotation, un manchon fixe disposé coaxialement à la pièce rotative de façon à ménager autour de celle-ci au moins une chambre circulaire dans laquelle débouchent des passages ménagés dans le manchon et la pièce cylindrique rotative, ces passages étant reliés, respectivement, à une tuyauterie fixe et au circuit de l'appareil, et des joints d'étancheité circulaires placés aux extrémités de ladite chambre, entre ladite pièce rotative et le manchon.

Dans ces dispositifs, certaines pièces et notamment les joints d'étancheité et les garnitures anti-friction ou les coussinets par l'intermédiaire desquels le manchon est monté sur la pièce cylindrique rotative s'usent et doivent être remplacé à intervalles réguliers. Dans les dispositifs connus où le manchon, les joints d'étancheité, les garnitures anti-friction et/ou les coussinets sont en une seule pièce, le remplacement des joints, des garnitures ou des coussinets est une opération relativement difficile, nécessitant le démontage du manchon ce qui est long et compliqué notamment lorsque le dispositif est placé entre le corps de l'appareil et un palier support.

- 2 -

Le but de la présente invention est de remédier à cet inconvénient et de faciliter le montage et l'entretien de ces dispositifs.

Le dispositif objet de l'invention est caractérisé en ce que les joints d'étancheité circulaires sont ouverts, en ce que le manchon est en deux parties dont le plan de jonction contient l'axe du manchon, et en ce que des joints d'étancheité additionnels sont logés dans des rainures longitudinales usinées dans la surface intérieure du manchon, dans le plan de jonction des deux parties, ces joints étant appliqués de manière étanche contre les joints d'étancheité circulaires lorsque le manchon est assemblé et monté sur la pièce cylindrique rotative.

Suivant un mode de réalisation préféré, l'écartement des joints d'étancheité circulaires délimitant la ou les chambres circulaires est fixé par une ou plusieurs lanternes montées glissantes sur la pièce cylindrique rotative, les joints étant comprimés par un presse-étoupe monté à une extrémité du manchon, et la ou les lanternes ainsi que le presse-étoupe sont en deux parties semi-circulaires.

D'autres caractéristiques de l'invention apparaîtront à la lecture de la description qui suit et se réfère aux dessins l'accompagnant qui montrent, à titre d'exemple non limitatif, un mode ue realisation de l'invention et sur lesquels :

La figure 1 est une coupe longitudinale, par un plan diamétral, d'un dispositif conforme à l'invention permettant d'alimenter en fluide un appareil rotatif et d'évacuer ce fluide, pendant la marche de l'appareil;

La figure 2 est une demi-vue en coupe transversale suivant l'axe A-A du dispositif de la figure 1; et

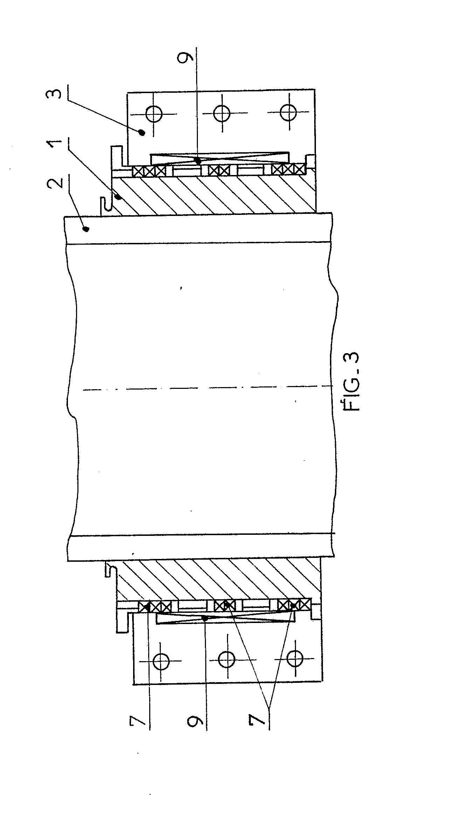

La figure 3 est une coupe longitudinale du dispositif,

- 3 -

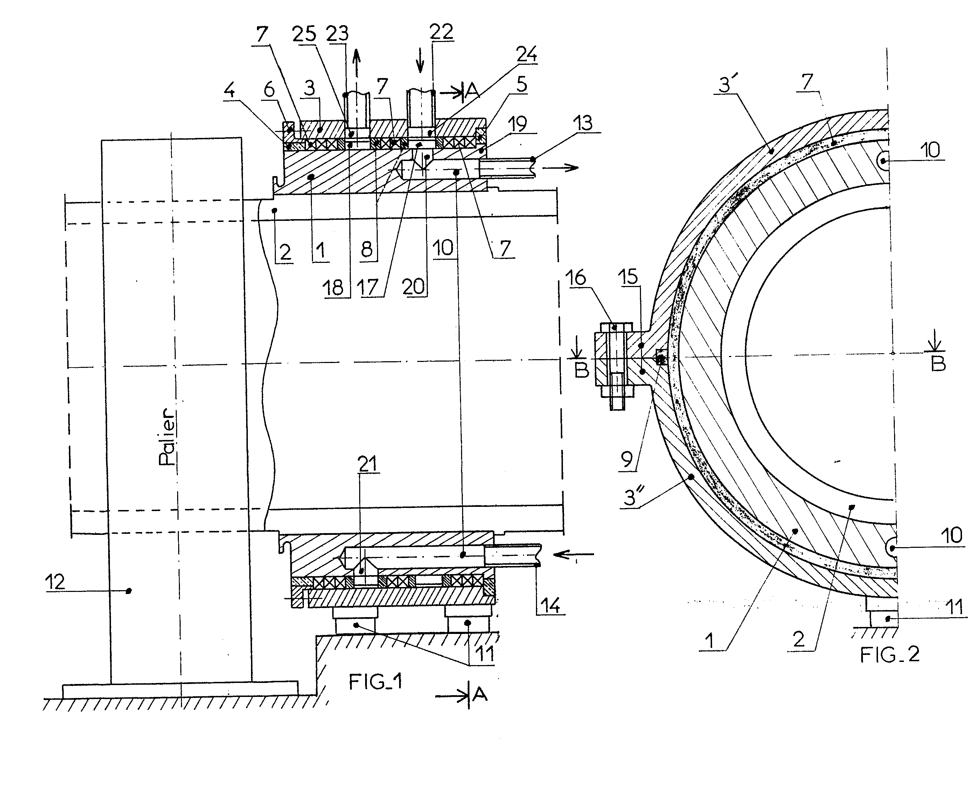

la coupe étant faite suivant le plan diamétral B-B perpendiculaire au plan de la figure 1.

Le dispositif représenté sur les dessins peut être utilisé, par exemple, pour assurer la circulation d'un fluide chauffant ou réfrigérant dans la double enveloppe d'un tambour rotatif pour la mise en oeuvre de traitements thermiques, de réactions chimiques, etc ... Il est monté sur un arbre creux 2 qui est fixé sur le tambour (non représenté) suivant l'axe de rotation de ce dernier, et supporté par un palier 12.

Ce dispositif comprend une bague 1 qui est fixée sur l'arbre 2 par frettage, clavetage, etc ... Cette bague est percée de deux alésages borgnes 10, dont les axes sont parallèles à l'axe de rotation et qui débouchent sur une face frontale de la bague. Ces alésages sont reliés respectivement à l'entrée et à la sortie du circuit du tambour rotatif par des tuyaux 13 et 14.

La bague 1 est entourée par un manchon 3 en deux parties 3' et 3" dont le plan de jonction B-B (figure 2) contient l'axe du manchon, qui coïncide avec l'axe de rotation. Les deux parties du manchon sont munies de brides 15 et sont assemblés au moyen de boulons 16. Le manchon est bloqué en rotation par des butées élastiques 11.

La bague 1 et la manchon 3 délimitent entre eux un espace annulaire dans lequel sont logés trois joints circulaires 7 et deux lanternes 8 placées entre les joints pour maintenir un écartement prédéterminé entre eux et former ainsi deux chambres circulaires 17 et 18. Les joints 7 sont ouverts, c'est-à-dire, qu'ils peuvent être mis en place sur la bague 1, après démontage du manchon 3, sans qu'il soit nécessaire de les enfiler par une des extrémités de l'arbre 2; Ils peuvent être constitués par exemple par des tresses enroulées autour de la bague 1. Les lanternes 8 sont en deux

0072326

- 4 -

parties semi-circulaires pour permettre leur mise en place et leur remplacement, après démontage du manchon.

A l'une de ses extrémités, la bague 1 comporte un talon circulaire 19 servant de butée au joint d'étancheité attenant. Ce talon sert de portée à un coussinet 5, en deux parties, fixé sur le manchon 3. Les joints 7 sont comprimés par un presse-étoupe 6, en deux parties, qui est monté à l'autre extrémité de la bague 1 et fixé sur le manchon 3. Deux demi-coussinets 4 fixés sur le presse-étoupe portent sur la surface cylindrique de la bague 1. Les coussinets 4 et 5 assurent la concentricité de la bague 1 et du manchon 3 et évitent l'écrasement des joints d'étancheité.

Des joints d'étancheité longitudinaux 9 sont logés dans des rainures usinées dans la surface intérieure du manchon 3, dans le plan de jonction des deux demi-manchons. Lorsque les deux parties du manchon sont assemblées, ces joints sont comprimés et appliqués sur les parois de la rainure et contre les joints circulaires 7 de façon à assurer l'étancheité des chambres 17 et 18 dans le plan de jonction.

Les alésages 10 communiquent avec les chambres 17 et 18, par des passages 20 et 21, respectivement. Les chambres 17 et 18 sont, par ailleurs, reliées à des tuyauteries d'alimentation 22 et d'évacuation 23 par des passages 24 et 25 percés dans le manchon 3.

Il ressort clairement de cette description et des dessins que les coussinets 4 et 5, les joints 7 et 9 et les lanternes 8 peuvent être remplacés très facilement après démontage du manchon 3.

Il est bien entendu que toutes les modifications qui peuvent être apportées au mode de réalisation décrit ci-dessus par l'emploi de moyens techniques équivalents entrent dans le cadre de l'invention.

Revendications

1. Dispositif pour amener un fluide à un appareil rotatif et/ou pour l'évacuer, constitué par une pièce cylindrique(1), solidaire de l'appareil et dont l'axe coïncide avec l'axe de rotation, un manchon fixe (3) disposé coaxialement à la pièce rotative de façon à ménager autour de celle-ci au moins une chambre circulaire (17, 18) dans laquelle débouchent des passages (20, 21, 24, 25) prévus dans le manchon et la pièce cylindrique rotative, ces passages étant reliés, respectivement, à une tuyauterie fixe (22, 23) et à un circuit de l'appareil, et des joints d'étancheité circulaires (7) placés aux extrémités de ladite chambre, entre la pièce rotative et le manchon, caractérisé en ce que le manchon (3) est en deux parties dont le plan de jonction (B-B) contient l'axe du manchon, en ce que les dits joints circulaires (7) sont ouverts et en ce que des joints d'étancheité additionnels (9) sont logés dans des rainures longitudinales usinées dans la surface intérieure du manchon, dans le plan de jonction des deux parties, ces joints (9) étant appliqués de manière étanche contre les joints d'étancheité circulaires (7) lorsque le manchon (3) est assemblé et monté sur la pièce cylindrique rotative (1).

2. Dispositif selon la revendication 1, caractérisé en ce que l'écartement des joints d'étancheité circulaires (7) délimitant la ou les chambres circulaires (17, 18) est fixé par une ou plusieurs lanternes (8) en deux parties semi-circulaires.

3. Dispositif selon la revendication 1 ou 2, caractérisé en ce que le joint d'étancheité circulaire (7) situé à une extrémité du manchon (3) est en butée contre un épaulement (5, 19) du manchon ou de la pièce cylindrique (1) et les joints circulaires (7) sont comprimés par un presse-étoupe (6) monté à l'autre extrémité du manchon, ledit presse-étoupe étant formé de deux parties semi-circulaires.

4. Dispositif selon la revendication 3, caractérisé en ce que chaque partie du manchon (3) est munie à une extrémité d'un demi-coussinet semi-circulaire (5).

5. Dispositif selon la revendication 3 ou 4, caractérisé en ce que chaque partie du presse-étoupe (6) est munie d'un demi-coussinet semi-circulaire (4).

FIG.2

FIG.1

FIG. 3

Office européen
des brevets

**RAPPORT DE RECHERCHE EUROPEENNE**

Numéro de la demande

EP 82 40 1487

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | F 16 L 39/04 |
| Y | FR-A-2 456 894 (P.FORKARDT) *Revendications 1-4; figure unique* | 1,4 | |
| | --- | | |
| Y | US-A-3 003 793 (PITT) *Figures 1,2* | 1,4 | |
| | --- | | |
| A | FR-A-1 120 657 (CHIKSAN) | 1 | |
| | --- | | |
| A | US-A-3 020 057 (GAMET) | 1 | |
| | ----- | | |

**DOMAINES TECHNIQUES RECHERCHES (Int. Cl. ³)**

F 16 L

Le présent rapport de recherche a été établi pour toutes les revendications

| Lieu de la recherche | Date d'achèvement de la recherche | Examinateur |
|---|---|---|
| LA HAYE | 03-11-1982 | ANGIUS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

_____

& : membre de la même famille, document correspondant

OEB Form 1503. 03.82